# FASCICULE DE BREVET EUROPEEN

(11) **EP 4 107 674 B1**
(45) Date de publication et mention de la délivrance du brevet: **17.09.2025**
(21) Numéro de dépôt: 21703948.6
(22) Date de dépôt: 12.02.2021
(51) Int. Cl.: G06N 10/40, G06N 10/70, G06N 10/20

(54) **DISPOSITIF DE CALCUL QUANTIQUE BASÉ SUR DES ATOMES DE RYDBERG INDIVIDUELS**
QUANTEN-RECHNERVORRICHTUNG BASIEREND AUF EINZELNEN RYDBERG-ATOMEN
QUANTUM COMPUTING DEVICE BASED ON INDIVIDUAL RYDBERG ATOMS

(30) Priorité: 19.02.2020 FR 2001646
(43) Date de publication de la demande: 28.12.2022
(73) Titulaire: Centre national de la recherche scientifique, 75016 Paris (FR); Institut d'Optique Théorique et Appliquée, 91127 Palaiseau CEDEX (FR)
(72) Inventeur: LAHAYE, Thierry, 91120 PALAISEAU (FR); BROWAEYS, Antoine, 91400 ORSAY (FR); NOGRETTE, Florence, 75014 PARIS (FR); BARREDO, Daniel, 92160 ANTONY (FR); SCHYMIK, Kai-Niklas, 75013 PARIS (FR)
(74) Mandataire: IPAZ
(86) Numéro de dépôt international: PCT/EP2021/053488
(87) Numéro de publication internationale: WO 2021/165155

(56) Documents cités:
- SYLVAIN DE LESELEUC DE KEROUARA: "Quantum simulation of spin models with assembled arrays of Rydberg atoms", 10 December 2018 (2018-12-10), XP055742865, Retrieved from the Internet <URL:https://oqatomlcfio.files.wordpress.com/2019/01/phd_thesis_deleseleuc_sylvain.pdf> [retrieved on 20201022]
- M.?O. BROWN ET AL: "Gray-Molasses Optical-Tweezer Loading: Controlling Collisions for Scaling Atom-Array Assembly", PHYSICAL REVIEW X, vol. 9, no. 1, 29 March 2019 (2019-03-29), XP055742800, DOI: 10.1103/PhysRevX.9.011057
- JOHN PRESKILL: "Quantum Computing in the NISQ era and beyond", QUANTUM, vol. 2, 31 July 2018 (2018-07-31), pages 79, XP055742853, DOI: 10.22331/q-2018-08-06-79
- SYLVAIN DE LESELEUC DE KEROUARA: "Quantum simulation of spin models with assembled arrays of Rydberg atoms", 10 December 2018 (2018-12-10), XP055742865, Retrieved from the Internet <URL:https://oqatomlcfio.files.wordpress.com/2019/01/phd_thesis_deleseleuc_sylvain.pdf> [retrieved on 20201022]
- M.?O. BROWN ET AL: "Gray-Molasses Optical-Tweezer Loading: Controlling Collisions for Scaling Atom-Array Assembly", PHYSICAL REVIEW X, vol. 9, no. 1, 29 March 2019 (2019-03-29), XP055742800, DOI: 10.1103/PhysRevX.9.011057
- JOHN PRESKILL: "Quantum Computing in the NISQ era and beyond", QUANTUM, vol. 2, 31 July 2018 (2018-07-31), pages 79, XP055742853, DOI: 10.22331/q-2018-08-06-79

## Description

L'invention porte sur un processeur quantique et plus particulièrement un dispositif de calcul quantique basé sur des atomes de Rydberg individuels.

En informatique quantique, le plus petit élément d'information est le bit quantique, appelé aussi qubit, qui se matérialise par un objet qui obéit aux règles de la physique quantique et qui possède deux états de base communément notés |0> et |1>. Contrairement à l'informatique classique où le plus petit élément d'information est un bit classique qui vaut soit 0, soit 1, un qubit peut prendre une infinité de valeurs possibles en étant dans une superposition cohérente, des états de base. Ainsi, appliquer une opération logique sur un qubit revient à l'appliquer simultanément à l'état |0> et à l'état |1>, alors qu'en informatique classique, cela revient à l'appliquer successivement sur le bit 0 puis sur le bit 1 pour traiter les deux valeurs possibles. L'avantage de ce parallélisme dans le traitement de l'information est d'autant plus notable que la quantité d'information est élevée. A titre d'exemple, manipuler 10 qubits revient à manipuler en une seule fois 2¹⁰=1024 valeurs possibles. L'informatique quantique repose, en outre, sur le phonème d'intrication selon lequel N qubits intriqués forment un système lié et présentent des états quantiques dépendant l'un de l'autre quelle que soit la distance qui les sépare. Ainsi, modifier l'état d'un qubit modifie instantanément les états des autres qubits. L'intrication permet, en particulier, de projeter des qubits dans des états donnés en en modifiant d'autres. Les potentialités de l'informatique quantique en termes de puissance de calcul sont néanmoins limitées par le phénomène de décohérence qui signifie la perte de la superposition quantique, et donc de la puissance de calcul. La décohérence est principalement provoquée par l'environnement et les perturbations mécaniques, électriques ou autres qu'il génère. La décohérence peut être corrigée par des codes correcteurs d'erreur basés sur la redondance. A titre d'exemple, il est requis environ 10 000 qubits physiques pour former 1 qubit logique.

Alors que l'élaboration d'un ordinateur quantique requérant un nombre significatif de qubits logiques reste un objectif lointain, des processeurs incorporant un nombre réduit de qubits physiques, généralement inférieur à 100, sont proposés et commercialisés. De tels processeurs sont généralement désignés par l'acronyme anglais NISQ (noisy intermediate-scale quantum, ou quantique d'échelle intermédiaire bruité) et sont généralement capables de réaliser certaines tâches au-delà de la capacité des ordinateurs classiques, voir par exemple [Preskill 2018]. Les processeurs NISQ sont particulièrement adaptés aux problèmes d'optimisation combinatoire. Les performances des processeurs NISQ en termes de puissance de calcul sont directement liées au nombre de qubits mis en œuvre. Les processeurs NISQ peuvent être classés selon le type de qubits employés parmi la liste comprenant : les supraconducteurs, les ions piégés, les photons, le spin de l'électron, les atomes de Rydberg individuels, etc.

La technologie des processeurs quantiques à atomes de Rydberg individuels est un candidat prometteur pour la réalisation de processeurs NISQ susceptibles d'avoir des applications pratiques. Cette technologie met en œuvre une matrice de pinces optiques dont chacune est capable de piéger au plus un atome électriquement neutre et préalablement refroidi pendant un intervalle de temps fortement dépendant des perturbations de l'environnement. Un qubit est encodé dans deux sous-niveaux Zeeman de chaque atome piégé et immergé dans un champ magnétostatique. Des impulsions Raman sont utilisées pour appliquer des portes à un qubit, c'est-à-dire pour manipuler l'état d'un seul qubit. Pour appliquer des portes à deux qubits, qui nécessitent des interactions entre deux atomes, on excite ces derniers vers des niveaux de Rydberg. En effet, les atomes de Rydberg présentent des dipôles électriques de grand moment dipolaire, ce qui rend possible des interactions de Van der Waals intenses même sur des distances de plusieurs dizaines de micromètres. Une introduction générale au calcul quantique avec des atomes de Rydberg est fournie par [Saffman 2010].

L'état de l'art des processeurs NISQ basés sur les atomes de Rydberg individuels mettent en place un nombre limité (inférieur à 50) d'atomes de Rydberg, donc de qubits. Augmenter le nombre de qubits à l'échelle de 1000 pour répondre à un besoin toujours croissant en puissance de calcul à l'aide des architectures mises en place pose un certain nombre de problèmes. En effet, les architectures traditionnelles mettent en œuvre une matrice à deux dimensions (2D) de pinces optiques chargées par des atomes individuels à travers un mécanisme de piégeage magnéto-optique, et mises en place à l'aide d'une lentille asphérique capable de focaliser un faisceau laser sur une tache de taille inférieure à 1 micromètre. Les performances en terme de taux de remplissage d'un tel type de piégeage sont de l'ordre de 50% ce qui signifie que 2000 pinces optiques, réparties, par exemple, dans une matrice de taille 45x45, sont requises pour avoir 1000 qubits. Le processus d'assemblage consiste successivement à : (i) déclencher le chargement par des atomes des éléments de la matrice, (ii) localiser les pinces optiques qui ont effectivement piégé un atome et (ii) déplacer les atomes attrapés pour former une matrice ordonnée de 1000 atomes. Etant donné un espacement de 5 micromètres requis entre deux pièges adjacents, une matrice carrée de taille 45x45 de pinces optiques correspond à une surface carrée supérieure à 200 micromètres par côté. Une lentille asphérique typique caractérisée, par exemple, par une ouverture numérique (ON) égale à 0.5 et une distance focale de 10 millimètres est incapable de couvrir une surface de 200 micromètres par côté sans qu'il y ait des aberrations géométriques, aberrations de type coma en particulier, conduisant à la formation de taches de plusieurs micromètres. En outre, La puissance optique requise pour la mise en place d'une pince optique est de l'ordre de 5 mW ce qui correspond à une puissance totale du faisceau laser de l'ordre du 10 W. Cela conduit, en particulier, à des problèmes thermiques affectant les performances du processeur quantique.

Par ailleurs, la durée d'assemblage d'une matrice d'atomes croît linéairement avec le nombre d'atomes à assembler, selon une durée moyenne d'une milliseconde par atome. Les architectures traditionnelles des processeurs NISQ basés sur les atomes de Rydberg individuels opèrent dans un milieu ultravide sous une pression de gaz résiduel de l'ordre de 10⁻¹² mbar. Dans un tel milieu, la durée de vie d'une matrice d'atomes est limitée à causes des collisions avec les atomes des gaz résiduels et évolue selon une loi exponentielle décroissante avec une constante de temps de 10/N secondes. Ainsi dès que N dépasse la centaine, le temps d'assemblage excède la durée de vie de la configuration, ce qui rend l'assemblage impossible.

Le document [Leseleuc de Kerouara 2018] et [Barredo 2018] divulgue la possibilité de former des matrices tridimensionnelles d'atomes piégés, et de les utiliser pour effectuer des simulations quantiques au moyen d'états de Rydberg. Le nombre d'atomes piégés peut atteindre 100.

[Leseleuc de Kerouara 2018] envisage par ailleurs la possibilité de former des matrices d'atomes piégés de plus grandes dimensions en les plaçant dans un environnement cryogénique. Cependant, aucun détail technique n'est donné sur la mise en œuvre effective d'un processeur quantique à atomes de Rydberg cryogénique.

Il existe donc un besoin pour une architecture améliorée de processeurs NISQ à atomes de Rydberg individuels capable de fonctionner avec un nombre plus élevé de qubits physiques, typiquement à l'échelle de 1000 qubits.

Conformément à l'invention, ce but est atteint grâce à l'utilisation conjointe d'une matrice tridimensionnelle de pinces optiques, de leur chargement par mélasses grises (au lieu d'un simple piège magnéto-optique) et d'un environnement cryogénique, typiquement à 4 K. L'utilisation d'un environnement cryogénique pose des difficultés techniques considérables, qui sont surmontées par l'utilisation d'un montage opto-mécanique particulier. Avantageusement, en outre, des « faisceaux lasers agiles », manipulés par des déflecteurs optiques, sont utilisés pour la manipulation Raman, l'adressage et l'excitation Rydberg des atomes piégés ; cette technique, en effet, s'avère particulièrement bien scalable à des matrices de grandes dimensions.

Un objet de l'invention est donc un dispositif de calcul quantique selon la revendication 1.

Les revendications 2-12 définissent des modes de réalisation particuliers d'un tel dispositif.

Un autre objet de l'invention est l'utilisation d'un tel dispositif pour réaliser des calculs quantiques sur un ensemble d'au moins 500 et de préférence au moins 1000 qubits du type à atomes de Rydberg.

Dans la suite on entend par « température cryogénique » une température inférieure à 150 K, et de préférence inférieure ou égale à 4 K, et par « ultravide » un vide caractérisé par une pression résiduelle inférieure à 10^{-12,} mbar et de préférence non supérieure à 10⁻¹⁴ mbar.

Les dessins annexés illustrent l'invention :
[Fig.1] illustre le principe du réarrangement d'une matrice tridimensionnelle de pinces optiques chargées par mélasses grises ;
[Fig. 2] illustre l'intérêt d'avoir recours à un environnement cryogénique ;
[Fig. 3] est une vue en coupe (partie gauche) et en éclaté (partie 4) d'un barillet de maintien de lentille :
[Fig. 4] illustre la compatibilité du barillet de la [Fig. 3] avec un refroidissement à 4K ;
[Fig. 5] est une vue en perspective d'un ensemble porte-lentille ;
[Fig. 6] est une première vue en coupe de cet ensemble porte-lentille ;
[Fig. 7] est une seconde vue en coupe de cet ensemble porte-lentille ;
[Fig. 8] est une vue en coupe de l'ensemble porte-lentille inséré dans une enceinte cryogénique ;
[Fig. 9] est une représentation schématique d'un dispositif
[Fig. 10] illustre l'utilisation d'un dispositif pour la réalisation d'opérations sur qubits.

Le premier obstacle à la réalisation d'une matrice comprenant un nombre d'atomes individuels de l'ordre de 1000 est le suivant.

L'approche traditionnelle consiste à utiliser des matrices bidimensionnelles (2D) de pinces optiques chargées par un simple piège magnéto-optique. Dans une telle configuration, le taux de remplissage moyen des pinces optiques ne peut dépasser 50% pour des raisons physiques. Aussi, pour piéger N atomes il est nécessaire de disposer d'une matrice de 2N pinces optiques, qui seront remplies de manière aléatoire. Un réarrangement des atomes permet ensuite d'obtenir une matrice ordonnée.

Concrètement, pour piéger N=1000 atomes il faudrait donc une matrice carrée d'au moins 2000 pinces, par exemple 45x45 pièges. Or, comme deux pièges adjacents doivent être séparés de cinq micromètres environ, la dimension linéaire de la matrice dépasse les 200 µm, très au-delà du champ d'une lentille asphérique du type couramment utilisé pour réaliser des matrices de pinces optiques. En effet, les aberrations géométriques, et en premier lieu celles de type coma, empêchent de faire des pinces optiques limitées par la diffraction à de si grandes distances de l'axe optique. En outre, comme il faut environ 5 mW de puissance laser à 850 nm par pince optique, on doit disposer au total de 10 W de puissance sur les atomes : cela conduit à des problèmes thermiques, en particulier (mais pas seulement) sur le modulateur spatial de phase (SLM) utilisé, en combinaison avec une lentille asphérique, pour générer de manière holographique les matrices de pinces optiques.

Ce double problème est résolu, conformément à l'invention, par l'utilisation combinée de matrices tridimensionnelles de pinces optiques ([Leseleuc de Kerouara 2018] et [Barredo 2018]) et d'une technique de chargement d'atomes individuels dans les pinces optiques, dite chargement par mélasses grises, décrite (dans le case de matrices 2D) dans [Brown 2019].

Il est démontré dans [Brown 2019] qu'en chargeant les pinces optiques non pas uniquement par un piège magnéto-optique habituel, mais par des mélasses grises, il est possible d'obtenir des taux de chargement excédant les 80%, et ce pour une puissance laser de seulement 3 mW par pince optique. Pour obtenir 1000 atomes, de l'ordre de 1250 pièges seulement sont alors nécessaires, ce qui nécessite donc 3.8 W de puissance laser, et non plus 10 W. Les problèmes thermiques évoqués plus haut sont alors très considérablement réduits.

Cependant, une matrice de 1250 pièges à deux dimensions représente encore une grille de 35x35 pièges, trop large pour le champ d'une lentille asphérique. C'est là qu'intervient l'utilisation d'une matrice tridimensionnelle, telle que celles démontrées dans [Leseleuc de Kerouara 2018] et [Barredo 2018], et qui sont parfaitement compatibles avec l'utilisation de mélasses grises.

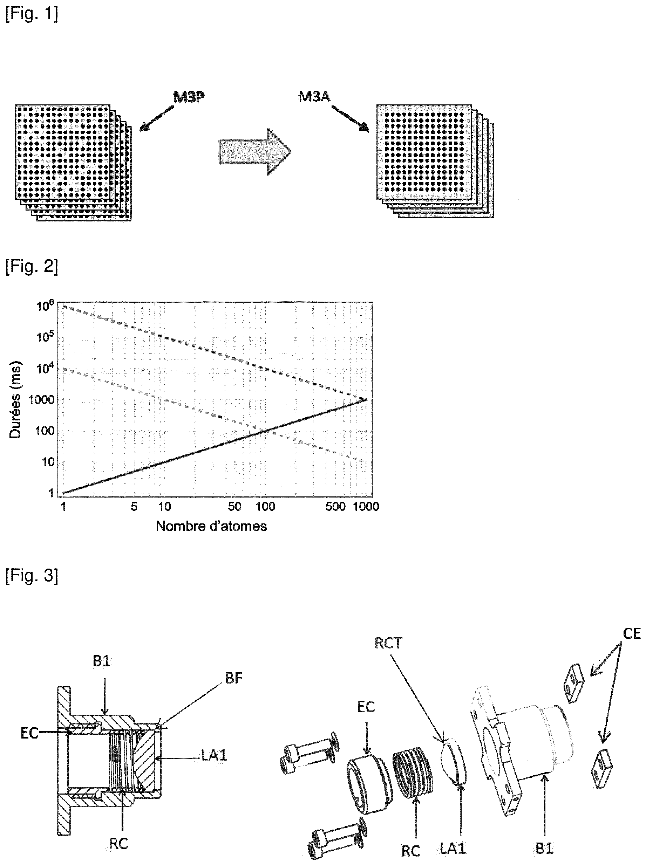

La partie gauche de la [Fig. 1] montre une matrice 3D de pinces optiques M3P formé de 5 plans de 16x16 pinces optiques, chargées à environ 80% d'atomes (cercles blancs : pinces optiques non chargées ; cercles noirs : pinces optiques chargées). La matrice contient donc environ 1024 atomes et 256 pinces optiques non chargées, disposées de manière aléatoire. Un réarrangement (partie droite de la figure) permet d'obtenir une matrices 3D ordonnée et compacte d'atomes M3A.

L'ensemble des pièges reste à une distance inférieure à 40µm du foyer de la lentille, valeur pour laquelle la qualité optique des pinces reste très proche de la limite de diffraction.

Il reste cependant un problème majeur à résoudre. En effet, le temps nécessaire au réarrangement des atomes dans la matrice désordonnée M3P est proportionnel au nombre d'atomes, et vaut environ 1 ms/atome (trait plein sur la [Fig. 2]). La constitution de la matrice ordonnée M3A nécessite donc environ 1s.

Or, dans les systèmes de l'état de l'art, opérant dans l'ultravide avec une pression résiduelle de l'ordre de 10⁻¹² mbar, la durée de vie d'un atome dans un piège - limitée par les collisions avec les molécules de gaz résiduel - est d'environ 10s. Cela signifie que la probabilité qu'une matrice de N atomes ne soit pas affectée par une collision décroît exponentiellement au cours du temps, avec une constante de temps de 10/N secondes (trait pointillé gris sur la [Fig. 2]). Aussi, dès que N dépasse la centaine, le temps d'assemblage excède la durée de vie de la configuration, et l'assemblage devient totalement inefficace. Pour passer de 100 à 1000 atomes, comme le temps d'assemblage augmente d'un facteur dix, et que la durée de vie de la matrice est réduite d'un facteur dix à qualité de l'ultravide constante, il faut améliorer cette dernière d'un facteur cent, et descendre donc à une pression résiduelle de l'ordre de 10⁻¹⁴ mbar (trait pointillé noir).

Atteindre de tels niveaux d'ultravide, meilleurs que 10⁻¹⁴ mbar, voire moins, impose de travailler dans un environnement cryogénique, à typiquement 4 K, afin que toutes les espèces constituant le gaz résiduel (en particulier le dihydrogène, toujours présent dans les systèmes d'ultravide) soient efficacement cryo-pompées par les parois froides. L'utilisation d'un environnement cryogénique constitue ainsi une autre caractéristique de l'invention.

Travailler dans une enceinte à ultravide EV en environnement cryogénique impose des contraintes sur le choix des matériaux et sur le design global du dispositif.

En ce qui concerne le choix des matériaux, la compatibilité ultravide nécessite des taux de dégazage très faibles et la possibilité d'un étuvage à 200°C, ce qui exclut les polymères, les colles, etc. habituellement très utilisés en cryogénie. En outre, le recours à un environnement cryogénique à 4 K nécessite une bonne conductivité thermique des composants pour assurer leur thermalisation, et des propriétés mécaniques demeurant satisfaisantes à 4 K.

Concernant le design global du dispositif, le défi principal consiste à prendre en compte le fait que le système doit passer d'une température de 500 K (pendant l'étuvage) à 4 K (en fonctionnement cryogénique), et donc subir des dilatations et contractions thermiques considérables, tout en respectant des tolérances très strictes.

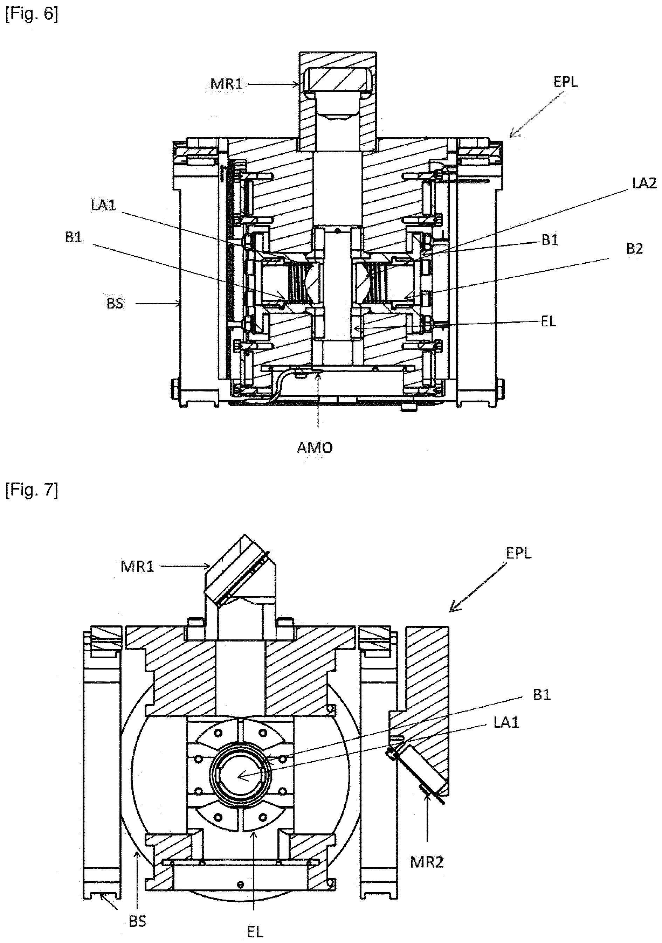

Le « cœur » d'un processeur quantique à atomes de Rydberg est constitué par deux lentilles convergentes asphériques LA1, LA2 se faisant face en configuration 2f (voir la [Fig. 6]). Une lentille (LA1, par exemple) focalise un faisceau laser préalablement modulé par un modulateur optique de phase SLM, situé à l'extérieur du cryostat, pour former la matrice M3P de pinces optiques ; l'autre lentille (LA2) permet de collimater ce faisceau optique de manière à faire ressortir de manière contrôlée la lumière du cryostat, mais surtout d'imager, sur une caméra auxiliaire placée à l'arrière du dispositif, la matrice de pièges, ce qui est crucial pour calibrer le dispositif d'assemblage. L'alignement des axes optiques des deux lentilles doit présenter, malgré les contractions thermiques mentionnées plus haut, une tolérance qui est typiquement inférieure à dix micromètres.

Les lentilles asphériques LA1, LA2 sont montées dans un barillet porte-lentille B1, par exemple en alliage cuivre-béryllium (CuBe) pour assurer à la fois de bonnes propriétés mécaniques et de conduction thermique. Lors du passage à froid, le barillet, métallique, se contracte d'environ 0.3%, alors que la contraction du verre de la lentille est typiquement 10 fois moindre. Si les lentilles étaient montées de manière ajustée à température ambiante, la contraction thermique différentielle conduirait, lors du passage à froid, à une compression radiale de la lentille, induisant des contraintes et donc une déformation de la lentille donnant lieu à des aberrations géométriques inacceptables. Pour cette raison le diamètre interne du barillet est, à température ambiante, légèrement supérieur à celui de la lentille, le jeu (environ 0.05 mm) étant calculé pour qu'après contraction thermique de 300K à 4K, la lentille soit parfaitement ajustée au barillet. Un ressort de compression RC, lui aussi en CuBe, maintenu comprimé par un écrou en CuBe EC vissé dans le filetage interne du barillet, appuie sur la lentille pour la plaquer sur une butée BF au fond du barillet. Les alésages destinés à recevoir les barillets sont de préférence réalisés en un seul perçage du bloc porte-barillets, assurant ainsi la coaxialité.

L'espacement entre lentilles est, par construction, supérieur à 2f à la température ambiante, d'une quantité calculée pour que la contraction thermique lors du refroidissement jusqu'à 4 K la compense parfaitement ; le réglage est assuré par la présence de cales (CE) entre le barillet et le porte-lentilles, en cuivre OFHC, dont l'épaisseur peut si besoin être retouchée par polissage.

Ce montage est illustré sur la [Fig. 3]. Un montage identique, utilisant un barillet B2, est utilisé pour la lentille asphérique LA2.

Les états de Rydberg sont extrêmement sensibles aux champs électrostatiques parasites ; pour les éviter il est important de pouvoir rendre conductrice, et donc équipotentielle, la surface des lentilles directement en regard des atomes. Pour cela, un revêtement RCT en matériau conducteur mais transparent à la longueur d'onde (typiquement visible ou proche infrarouge) du faisceau de piégeage est appliqué sur les lentilles. Ce revêtement est par exemple en ITO (oxyde d'indium et étain). Cependant, la couche d'ITO présente une absorption optique résiduelle qui peut atteindre quelques pourcents. Pour des puissances de laser piège avoisinant les 4 W, cela conduirait à plusieurs dizaines de mW de charge thermique dans le cryostat, ce qui conduirait à un échauffement non négligeable des lentilles. Le traitement des lentilles sera donc fait avec une épaisseur d'ITO de 50 nm seulement, ce qui est réalisable et suffisant pour assurer une bonne conductivité statique.

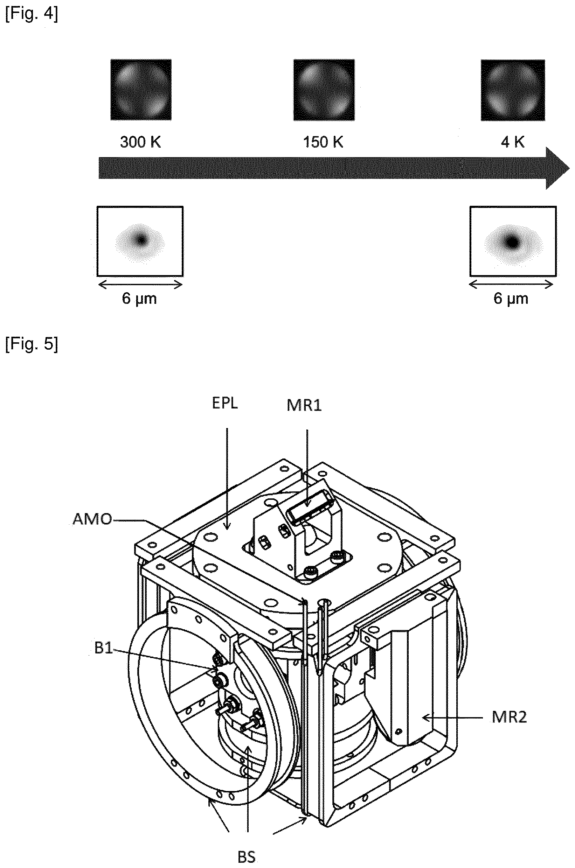

La [Fig. 4] illustre le résultat d'un test de refroidissement des lentilles asphériques. Les images en haut de la figure ont été obtenues en plaçant la paire de lentilles entre un polariseur et un analyseur croisés : en l'absence de contraintes, on doit observer une croix noire, et en particulier le centre du champ doit être noir. Cela est le cas aussi bien à 300K (gauche), qu'à 150 K (centre) et à 4 K (droite). Une analyse quantitative des images montre qu'à 4 K, le contraste est aussi élevé qu'à 300 K. A cours du refroidissement, une très légère baisse transitoire de contraste est observée. Cette baisse s'explique par le fait que la lentille, dont la conductivité thermique est faible, se refroidit moins vite que le barillet en CuBe (bon conducteur de la chaleur), qui donc exerce transitoirement des contraintes mécaniques (réversibles) sur la lentille. Les images du bas montrent le faisceau dans le plan de piégeage imagé sur une caméra CCD ; dans les deux cas le spot a un rayon à 1/e² inférieur à 1.1 µm et des aberrations faibles, ce qui est suffisant pour obtenir un piégeage d'atomes individuels.

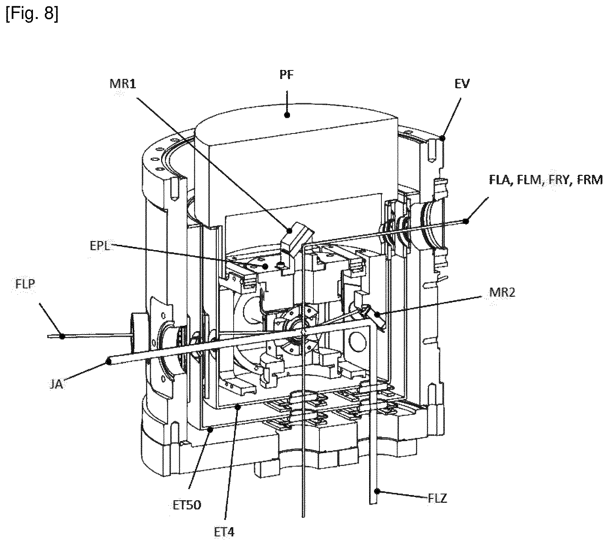

La manipulation des atomes nécessite de pouvoir appliquer, au cours d'une séquence expérimentale, des impulsions de champs électromagnétiques variés : champs électrostatiques, champs magnétiques statiques, champs hyperfréquences. La présence des parois de la chambre à vide et de deux écrans thermiques à 50 K et à 4 K (références ET50 et ET4 sur la [Fig. 8]) nécessaires au fonctionnement du cryostat exclut de les appliquer depuis l'extérieur de la chambre, car les champs hyperfréquence appliqués seraient écrantés.

Aussi, les deux barillets B1 et B2 sont intégrés à un ensemble porte-lentilles EPL qui est également équipé d'au moins huit électrodes EL, permettant de générer un champ électrique homogène et de direction arbitraire (ceci afin de pouvoir compenser les éventuels champs électriques parasites qui perturberaient les états de Rydberg) ; d'au moins trois paires de bobines BS permettant de créer des champs magnétiques statiques de plusieurs dizaines de Gauss, uniformes ou présentant un gradient, et de direction arbitraires (afin d'éviter une charge thermique, due à l'effet Joule, trop importante pour le cryostat, les bobines sont préférentiellement constituées de fil supraconducteur en NbTi dans une matrice de cuivre) ; et d'au moins trois antennes hyperfréquence AMO, orthogonales deux à deux, permettent d'appliquer des champs oscillants à une dizaine de GHz, et dont la polarisation au niveau des atomes est contrôlable en jouant sur les phases relatives des trois composantes. Les antennes hyperfréquences peuvent ne pas être présentes ; cela limite cependant le choix des protocoles de calcul quantique pouvant être mis en œuvre.

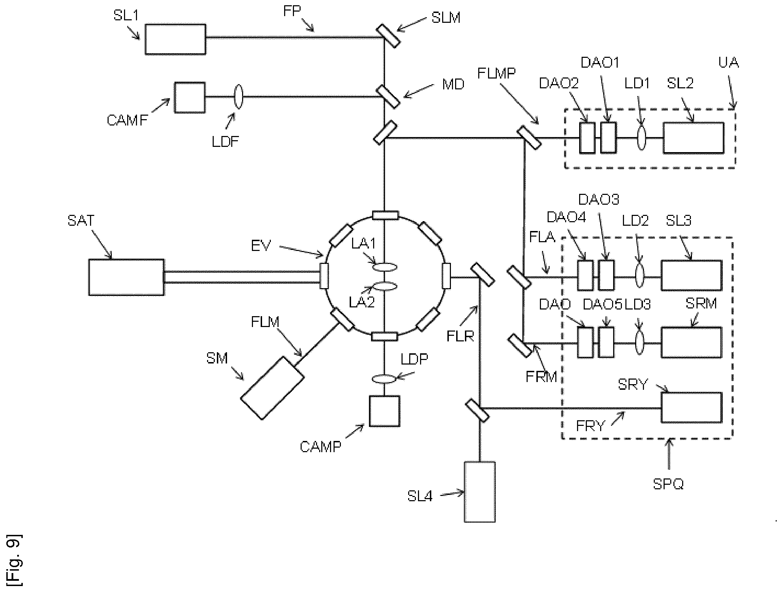

L'ensemble porte-lentilles doit également garantir des accès optiques selon plusieurs directions pour permettre le refroidissement, le piégeage, l'adressage et l'excitation des atomes, ainsi que leur observation (cf. [Fig. 8] et [Fig. 9]). Les [Fig. 5], [Fig. 6] et [Fig. 7] représentent en détail un ensemble porte-lentilles.

Dans le mode de réalisation des figures 5 à 9, l'ensemble porte-lentilles inclut deux miroirs de renvoi MR1, MR2.

Le miroir MR1 permet de diriger verticalement vers le bas des faisceaux lasers, d'assemblage FLA, de refroidissement FLM (formant à la fois un piège magnéto-optique et une mélasse grise), d'excitation Raman FRA et d'excitation Rydberg FRY qui arrivent dans l'enceinte cryogénique selon une direction horizontale. Ce faisceau ne peut pas entrer dans l'enceinte ultravide EV par le haut, à cause de la présence du plan froid PF du cryostat (cf. [Fig. 8]). Aussi, le miroir MR1 résout un problème d'encombrement lié à l'utilisation d'un environnement cryogénique.

Le miroir MR2 permet de dévier de 90° un faisceau laser de refroidissement Zeeman FLR se propageant dans une direction opposée à celle d'un jet atomique JA provenant d'une source d'atomes (typiquement de Rubidium) et alimentant la matrice de pinces optiques. Le faisceau laser de refroidissement Zeeman passe généralement par un hublot situé en face du faisceau atomique. Dans un dispositif fonctionnant à température ambiante, les atomes du jet ne se déposent que de manière temporaire, ne l'opacifiant pas. A 4 K, le jet de rubidium rendrait rapidement le hublot complètement opaque. Ce problème est résolu par l'utilisation du miroir de renvoi MR2, qui se couvre au cours du temps de rubidium mais reste réfléchissant pour le faisceau laser de ralentissement.

La [Fig. 9] constitue une représentation schématique d'un dispositif de calcul quantique, vu du haut. L'enceinte à ultravide EV est reliée à une source d'atomes SAT qui génère le jet atomique JA mentionné plus haut. Une source laser SL4 génère le faisceau de refroidissement Zeeman FLR, mentionné plus haut, qui refroidit les atomes du jet JA avant qu'ils ne parviennent à la zone de piégeage.

Des sources laser SM génèrent des faisceaux lasers, se propageant dans des sens opposés dans trois directions différentes (une seule source et un seul faisceau représentés) pour générer à la fois un piège magnéto-optique (le champ magnétique de piégeage, présentant un gradient, étant généré par les bobines BS alimentées en configuration anti-Helmholtz) et la mélasse optique grise. Une première source laser SL1 génère un faisceau de piégeage FP qui, après avoir été modulé par le modulateur spatial de phase SLM et focalisé par la lentille asphérique LA1, génère la matrice tridimensionnelle de pinces optiques. Ce faisceau, collimaté par la lentille LA2, sort de l'enceinte est parvient à une caméra CAMP qui permet, à l'aide de la lentille LDP, d'obtenir une image des atomes piégés.

L'unité UA d'assemblage comprend une source laser SL2 pour générer un faisceau laser FLPM formant une pince optique mobile permettant de déplacer les atomes piégés dans la matrice M3P afin de constituer la matrice compacte et régulière d'atomes M3A. La pince optique mobile doit pouvoir se déplacer en trois dimensions ; le déplacement axial est assuré par une lentille déformable commandée électroniquement LD1, à longueur focale variable ; les déplacements dans un plan perpendiculaire à l'axe optique est assuré par deux déflecteurs acousto-optiques DAO1, DAO2.

Un système d'application de portes logiques quantiques SPQ comprend au moins une source laser SRM pour générer une paire de faisceaux Raman copropageants FRM et au moins une source laser SRY pour générer un faisceau d'excitation Rydberg FRY. Le ou les faisceaux Rydberg FRY éclairent l'ensemble de la matrice tridimensionnelle d'atomes, d'une manière globale. L'adressage, atome par atome, est obtenu en focalisant de manière sélective sur un atome deux faisceaux d'adressage FLA qui applique un déplacement lumineux. Chaque faisceau FLA est généré par une source laser SL3, focalisé à la fois par la lentille asphérique LA1 et par une lentille déformable commandée électroniquement LD2 (cette dernière, de longueur focale variable, permet de sélectionner un plan de la matrice d'atomes piégés) et déplacé dans un plan perpendiculaire à l'axe optique par deux déflecteurs acousto-optiques DAO3, DAO4 ; dans un souci de simplicité, un seul faisceau d'adressage et son système de génération sont représentés. De même, les faisceaux Raman FRM sont appliqués de manière sélective à un atome grâce à une lentille déformable LD3 et deux déflecteurs acousto-optiques DAO5, DAO6.

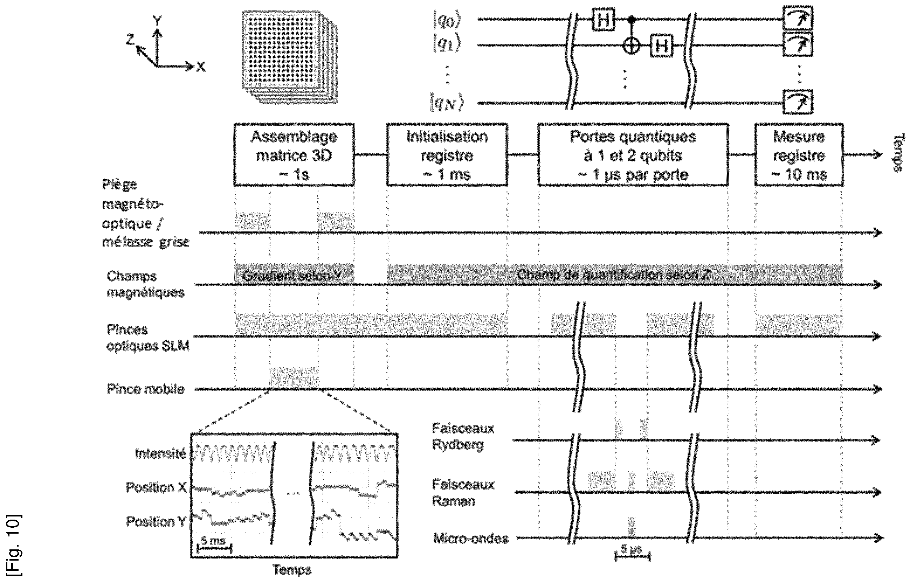

La [Fig. 10] illustre l'utilisation du dispositif de la [Fig. 8] et de la [Fig. 9] pour effectuer des calculs quantiques.

Comme mentionné plus haut, l'encodage des qubits se fait sur deux sous-niveaux Zeeman des états hyperfins du fondamental des atomes ; l'initialisation du registre de qubits se fait par pompage optique global avec un faisceau FRM qui couvre l'ensemble de la matrice. Les temps de cohérence peuvent atteindre la seconde pour un choix approprié des sous-niveaux Zeeman encodant le qubit (transition dite d'horloge).

La lecture de l'état des qubits se fait par imagerie de fluorescence sélective, par exemple selon la technique décrite dans [Fuhrmanek 2011], mais étendue à une matrice tridimensionnelle.

En ce qui concerne l'application de portes à un qubit, elle se fait à l'aide d'une paire de faisceaux Raman copropageants FRM, focalisés sur le qubit désiré à l'aide de déflecteurs acousto-optiques DAO5, DAO6 et d'une lentille déformable commandée électroniquement LD3, comme expliqué en référence à la [Fig. 9]. Grâce à la forte focalisation des faisceaux Raman, de taille similaire à celle des pinces optiques, ils divergent fortement lorsque l'on s'éloigne du plan dans lequel ils sont focalisés, ce qui fait que la diaphonie entre atomes situés en vis-à-vis dans des plans successifs est faible.

Pour appliquer des portes à deux qubits (ce qui requiert l'excitation sélective, vers un état de Rydberg, d'abord de l'atome de contrôle, puis de l'atome cible au sein de la matrice), la solution retenue consiste à avoir des faisceaux d'excitation Rydberg globaux FRY (qui couvrent toute la matrice ; pour cela le schéma d'excitation à deux photons dit inversé est utilisé car les puissances laser disponibles permettent, avec des faisceaux de l'ordre de la centaine de µm de diamètre, d'atteindre des fréquences de Rabi de plusieurs MHz) et de sélectionner les atomes concernés en leur appliquant des déplacements lumineux à l'aide de deux faisceaux d'adressage FLA désaccordés indépendants, passant eux aussi, comme cela a été expliqué plus haut, par une combinaison lentille déformable (sélection du plan d'atomes) - déflecteur acousto-optique 2D (sélection de l'atome dans son plan). Cela permet d'appliquer les impulsions d'excitation Rydberg sur les deux atomes à quelques centaines de ns d'intervalle, afin de maximiser les fidélités des portes. En variante, il serait possible d'utiliser un faisceau d'excitation Rydberg fortement focalisé et dirigé sur les atomes à exciter par des déflecteurs acousto-optiques, mais cela est rendu complexe par les intensités élevées en jeu.

Aussi bien pour les faisceaux Raman que pour les faisceaux d'adressage permettant l'excitation Rydberg, disposer de déflecteurs acousto-optiques indépendants permet d'avoir une grande agilité dans l'application des pulses, qui peuvent se succéder, sur des atomes distincts, à des cadences de l'ordre du MHz.

La diaphonie résiduelle des portes à un qubit, dû au fait que les faisceaux Raman éclairent aussi, (bien que faiblement grâce à leur divergence) des atomes dans les plans adjacents au plan d'intérêt, n'est pas nécessairement un handicap pour un grand nombre d'applications intéressantes des NISQ, telles que la simulation quantique variationnelle (Variational Quantum Simulation, ou VQS). En revanche, pour des applications de calcul quantique « traditionnel » (circuit model) il convient de minimiser la diaphonie. Pour cela, dans une variante de l'invention, on peut envisager, avec les mêmes techniques, d'avoir deux paires de lentilles asphériques, permettant de focaliser les faisceaux Raman selon deux axes orthogonaux, ce qui ne conduit à un couplage entre les deux états du qubit que pour l'atome adressé, puisque lui seul est couvert par les deux faisceaux Raman.

### La [Fig. 10] montre que :

Le chargement de la matrice s'effectue en activant le faisceau de piégeage pour former la matrice tridimensionnelle de pinces optiques ainsi que le piège magnéto-optique et la mélasse grise, et en appliquant un champ magnétique présentant un gradient le long de l'axe Y à l'aide des bobines supraconductrices en configuration anti-Helmholtz. Plus précisément, le piège magnéto-optique est activé en premier pour former un nuage d'atomes froids, puis il est désactivé et la mélasse grise est activée pour obtenir un refroidissement encore plus poussé. Ensuite, l'assemblage est effectué au moyen de la pince optique mobile (faisceau FLA) en éteignant la mélasse grise, qui est réactivée à la fin de l'assemblage.

L'initialisation du registre nécessite l'application d'un champ magnétique de quantification selon l'axe Z, qui est maintenu pendant toute la durée d'un calcul quantique. L'application de portes quantiques à 1 et 2 qubits s'effectue au moyen des faisceaux Rydberg, Raman et d'hyperfréquences. Lorsque des atomes sont portés dans des états de Rydberg, il est nécessaire de désactiver temporairement le faisceau de piégeage. Dans certains protocoles de calcul quantique, il peut être utile d'appliquer un champ hyperfréquence pour induire des transitions entre deux états de Rydberg distincts.

La lecture du registre de qubits est effectuée au moyen de la caméra CAMF, qui détecte la fluorescence des atomes piégés. Une lentille LDF forme une image de la matrice d'atomes sur la caméra CAMF et un miroir dichroïque MD sélectionne la longueur d'onde de l'émission fluorescente.

De nombreuses variantes sont possibles. Par exemple, la géométrie de l'ensemble porte-lentilles peut être différente de celle des figures 5 à 7. De même, les matériaux utilisés sont donnés uniquement à titre d'exemple. D'autres schémas d'excitation des atomes et d'application de portes quantiques peuvent être utilisés, ce qui entraine une architecture différente du système.

### Références bibliographiques

[Preskill 2018] : John Preskill « Quantum Computing in the NISQ era and beyond » arXiv:1801.00862v3, 31 juillet 2018.

[Saffman 2010] : M. Saffman et al. « Quantum information with Rydberg atoms » arXiv:0909.4777v3, 12 mai 2010.

[Leseleuc de Kerouara 2018] : Sylvain de Leseleuc de Kerouara « Quantum simulation of spin models with assembled arrays of Rydberg atoms », thèse soutenue le 10 décembre 2018.

[Barredo 2018] : D. Barredo et al., « Synthetic three-dimensional atomic structures assembled atom by atom », Nature 561, 79 (2018).

[Brown 2019] : M. O. Brown et al., « Gray-Molasses Optical-Tweezer Loading : Controlling Collisions for Scaling Atom-Array Assembly », Phys. Rev. X 9, 011057 (2019).

[Fuhrmanek 2011] : Fuhrmanek et al., Free-space lossless state-detection of a single trapped atom, Phys. Rev. Lett. 106, 133003 (2011).

## Revendications

1. Dispositif de calcul quantique comprenant :
• une unité de piégeage d'atomes comprenant une première source laser (SL1) adaptée pour générer un faisceau optique de piégeage (FP), un modulateur spatial de phase (SLM) configuré pour moduler ledit faisceau optique de piégeage, une première lentille asphérique (LA1) configurée pour focaliser le faisceau optique de piégeage modulé par le modulateur spatial de phase et une deuxième lentille asphérique (LA2) placée en face de la première lentille asphérique selon un même axe optique, adaptée pour collimater le faisceau optique de piégeage focalisé par la première lentille asphérique, le modulateur spatial de phase étant configuré de manière à coopérer avec la première lentille asphérique pour générer une matrice tridimensionnelle de pinces optiques (M3P) dans un espace entre la première et la deuxième lentille asphérique, chacune des pinces optiques étant susceptible de piéger au plus un atome ;
• une source d'atomes (SAT), configurée pour générer un faisceau d'atomes (JA) dirigé vers l'espace contenant la matrice tridimensionnelle de pinces optiques ;
• un système magnéto-optique de refroidissement des atomes du faisceau (SM), configuré pour générer, dans l'espace contenant la matrice tridimensionnelle de pinces optiques, un nuage d'atomes susceptibles d'être piégés par lesdites pinces optiques ;
• un système d'application de portes logiques quantiques (SPQ) à des atomes piégés dans les pinces optiques de la matrice tridimensionnelle de pinces optiques ;
• une enceinte à ultravide (EV) contenant au moins la première et la deuxième lentille asphérique, ainsi que l'espace entre les deux dites lentilles ; et
un cryostat pour établir une température cryogénique dans l'enceinte à ultravide ; dans lequel dispositif :
• le système magnéto-optique de refroidissement des atomes du faisceau est du type à mélasse grise ;
• ladite unité de piégeage d'atomes comporte deux barillets porte-lentille (B1, B2) disposés en face à face, chaque barillet portant l'une desdites lentilles asphériques avec un jeu dans un plan perpendiculaire à un axe longitudinal du barillet, confondu avec un axe optique de la lentille, ledit jeu étant suffisant pour compenser un différentiel de contraction thermique entre le barillet et la lentille lors d'un passage d'une température ambiante à ladite température cryogénique, et chacun des barillets porte-lentille présente à une extrémité une butée (BF) et contient un ressort (RC) adapté pour exercer sur la lentille asphérique une force orientée selon ledit axe longitudinal, plaquant la lentille contre la butée.

2. Dispositif selon l'une quelconque des revendications précédentes dans lequel chacune des lentilles asphériques présente, sur ses faces, un revêtement conducteur et transparent (RCT) à la longueur d'onde dudit faisceau de piégeage, ledit revêtement présentant une épaisseur inférieure à 100 nanomètres.

3. Dispositif selon l'une quelconque des revendications précédentes comprenant également une caméra (CAMP) coopérant avec la seconde lentille asphérique pour acquérir une image d'atomes piégés par les pinces optiques de la matrice tridimensionnelle.

4. Dispositif selon l'une quelconque des revendications précédentes comprenant en outre une unité d'assemblage (UA) configurée pour créer et déplacer une pince optique mobile dans l'un des plans de ladite matrice tridimensionnelle de pinces optiques.

5. Dispositif selon la revendication 4 dans lequel l'unité d'assemblage comprend :
• une deuxième source laser (SL2) configurée pour générer un faisceau optique d'assemblage ;
• une première lentille déformable (LD1), présentant une longueur focale variable, configurée pour focaliser le faisceau optique d'assemblage de manière à former une pince optique dont la position peut être variée de manière axiale de manière à sélectionner un plan de ladite matrice tridimensionnelle de pinces optiques, et
• deux déflecteurs acousto-optiques (DAO1, DAO2) configurés pour déplacer ladite pince optique mobile dans le plan de pinces optiques sélectionné selon deux directions perpendiculaires à l'axe du faisceau optique d'assemblage.

6. Dispositif selon l'une quelconque des revendications précédentes comprenant en outre, à l'intérieur de l'enceinte ultravide :
• un ensemble d'électrodes (EL) configurées pour générer un champ électrostatique ajustable en intensité et direction dans l'espace contenant la matrice tridimensionnelle de pinces optiques ; et
• un ensemble de bobines (BS) configurées pour générer un champ magnétostatique ajustable en intensité et direction dans l'espace contenant la matrice tridimensionnelle de pinces optiques.

7. Dispositif selon la revendication 6 dans lequel lesdits ensembles d'électrodes et bobines sont agencés entre l'espace contenant la matrice tridimensionnelle de pinces optiques et un plan froid (PF) du cryostat et ménagent un accès audit espace pour au moins un faisceau laser, le dispositif comprenant également un miroir de renvoi (MR1), également situé à l'intérieur de l'enceinte ultravide, pour diriger ledit faisceau laser à travers ledit accès.

8. Dispositif selon l'une quelconque des revendications précédentes dans lequel le système d'application de portes logiques quantiques comprend:
a. au moins une troisième source laser (SL3) configurée pour générer un faisceau optique d'adressage (FLA), adapté pour appliquer un déplacement lumineux à des atomes piégés dans la matrice tridimensionnelle de pinces optiques,
**b. une** deuxième lentille déformable (LD2), présentant une longueur focale variable, configurée pour focaliser ledit faisceau optique d'adressage dans ladite matrice tridimensionnelle de pinces optiques, et
c. deux déflecteurs acousto-optiques (DOA3, DOA4) configurés pour contrôler spatialement la direction de propagation du faisceau optique d'adressage, coopérant avec ladite deuxième lentille déformable pour focaliser ledit faisceau d'adressage en correspondance d'une pince optique de ladite matrice.

9. Dispositif selon l'une quelconque des revendications précédentes, dans lequel le système magnéto-optique de refroidissement comprend une quatrième source laser (SL4) configurée pour générer un faisceau optique de refroidissement laser et un miroir de renvoi (MR2), situé à l'intérieur de l'enceinte ultravide, pour diriger ledit faisceau optique de refroidissement dans une direction de propagation opposée à celle du faisceau d'atomes.

10. Dispositif selon l'une quelconque des revendications précédentes, dans lequel ladite matrice tridimensionnelle de pinces optiques comprend au moins 5 plans d'au moins 16x16 pinces optiques.

11. Dispositif selon l'une quelconque des revendications précédentes, dans lequel ledit cryostat est un cryostat à 4K.

12. Dispositif selon l'une quelconque des revendications précédentes, dans lequel ladite source d'atomes est une source d'atomes de rubidium.

13. Utilisation d'un dispositif selon l'une quelconque des revendications précédentes pour réaliser des calculs quantiques sur un ensemble d'au moins 500 et de préférence au moins 1000 qubits du type à atomes de Rydberg.

## Patentansprüche

1. Quantenberechnungsvorrichtung, umfassend:
• eine Atomeinfangeinheit, umfassend eine erste Laserquelle (SL1), die angepasst ist, um einen optischen Einfangstrahl (FP) zu erzeugen, einen räumlichen Phasenmodulator (SLM), der konfiguriert ist, um den optischen Einfangstrahl zu modulieren, eine erste asphärische Linse (LA1), die konfiguriert ist, um den durch den räumlichen Phasenmodulator modulierten optischen Einfangstrahl zu fokussieren, und eine zweite asphärische Linse (LA2), die gegenüber der ersten asphärischen Linse entlang derselben optischen Achse angeordnet ist und angepasst ist, um den durch die erste asphärische Linse fokussierten optischen Einfangstrahl zu kollimieren, wobei der räumliche Phasenmodulator konfiguriert ist, um mit der ersten asphärischen Linse zusammenzuwirken, um eine dreidimensionale Matrix aus optischen Pinzetten (M3P) in einem Raum zwischen der ersten und der zweiten asphärischen Linse zu erzeugen, wobei jede der optischen Pinzetten höchstens ein Atom einfangen kann;
• eine Atomquelle (SAT), die konfiguriert ist, um einen Atomstrahl (JA) zu erzeugen, der auf den Raum gerichtet ist, der die dreidimensionale Matrix aus optischen Pinzetten enthält;
• ein magneto-optisches System (SM) zur Kühlung der Atome des Strahls, das konfiguriert ist, um in dem Raum, der die dreidimensionale Matrix aus optischen Pinzetten enthält, eine Wolke aus Atomen zu erzeugen, die von den optischen Pinzetten eingefangen werden können;
• ein System zur Quantenlogikgatteranwendung (SPQ) auf Atome, die in den optischen Pinzetten der dreidimensionalen Matrix aus optischen Pinzetten eingefangen sind;
• ein Ultrahochvakuumgehäuse (EV), das mindestens die erste und die zweite asphärische Linse sowie den Raum zwischen den zwei Linsen enthält; und
• einen Kryostaten zum Erzeugen einer kryogenen Temperatur in dem Ultrahochvakuumgehäuse; wobei die Vorrichtung:
• das magneto-optische System zur Kühlung der Atome des Strahls vom Typ graue Melasse ist;
• die Atomeinfangeinheit zwei gegenüberliegend angeordnete Linsenhaltezylinder (B1, B2) aufweist, wobei jeder Zylinder eine der asphärischen Linsen mit einem Spiel in einer Ebene senkrecht zu einer Längsachse des Zylinders, die mit einer optischen Achse der Linse zusammenfällt, trägt, wobei der Spielraum ausreichend ist, um einen thermischen Kontraktionsunterschied zwischen dem Zylinder und der Linse bei einem Übergang von einer Umgebungstemperatur zu der kryogenen Temperatur auszugleichen, und jeder der Linsenhalterungszylinder an einem Ende einen Anschlag (BF) aufweist und eine Feder (RC) enthält, die angepasst ist, um auf die asphärische Linse eine Kraft auszuüben, die entlang der Längsachse ausgerichtet ist, die die Linse gegen den Anschlag drückt.

2. Vorrichtung nach einem der vorstehenden Ansprüche, wobei jede der asphärischen Linsen auf ihren Flächen eine leitfähige und transparente Beschichtung (RCT) mit der Wellenlänge des Einfangstrahls aufweist, wobei die Beschichtung eine Dicke von weniger als 100 Nanometern aufweist.

3. Vorrichtung nach einem der vorstehenden Ansprüche, umfassend außerdem eine Kamera (CAMP), die mit der zweiten asphärischen Linse zusammenwirkt, um ein Bild von Atomen zu erfassen, die von den optischen Pinzetten der dreidimensionalen Matrix eingefangen wurden.

4. Vorrichtung nach einem der vorstehenden Ansprüche, ferner umfassend eine Montageeinheit (UA), die konfiguriert ist, um eine bewegliche optische Pinzette in einer der Ebenen der dreidimensionalen Matrix aus optischen Pinzetten zu erzeugen und zu bewegen.

5. Vorrichtung nach Anspruch 4, wobei die Montageeinheit umfasst:
• eine zweite Laserquelle (SL2), die zum Erzeugen eines optischen Montagestrahls konfiguriert ist,
• eine erste verformbare Linse (LD1) mit einer variablen Brennweite, die konfiguriert ist, um den optischen Montagestrahl so zu fokussieren, dass eine optische Pinzette gebildet wird, deren Position axial variiert werden kann, um eine Ebene der dreidimensionalen Matrix aus optischen Pinzetten auszuwählen, und
• zwei akusto-optische Deflektoren (DAO1, DAO2), die konfiguriert sind, um die bewegliche optische Pinzette in der ausgewählten Ebene der optischen Pinzetten in zwei Richtungen senkrecht zur Achse des optischen Montagestrahls zu bewegen.

6. Vorrichtung nach einem der vorstehenden Ansprüche, ferner umfassend, innerhalb des Ultrahochvakuumgehäuses:
• einen Satz von Elektroden (EL), die zum Erzeugen eines in Intensität und Richtung im Raum, der die dreidimensionale Matrix aus optischen Pinzetten enthält, einstellbaren elektrostatischen Feldes konfiguriert sind; und
• einen Satz von Spulen (BS), die zum Erzeugen eines in Intensität und Richtung im Raum, der die dreidimensionale Matrix aus optischen Pinzetten enthält, einstellbaren magnetostatischen Feldes konfiguriert sind.

7. Vorrichtung nach Anspruch 6, wobei die Sätze von Elektroden und Spulen zwischen dem Raum, der die dreidimensionale Matrix aus optischen Pinzetten enthält, und einer kalten Ebene (PF) des Kryostaten angeordnet sind und einen Zugang zu diesem Raum für mindestens einen Laserstrahl bereitstellen, wobei die Vorrichtung außerdem einen Umlenkspiegel (MR1) umfasst, der ebenfalls innerhalb des Ultrahochvakuumgehäuses angeordnet ist, um den Laserstrahl durch den Zugang zu lenken.

8. Vorrichtung nach einem der vorstehenden Ansprüche, wobei das System zur Quantenlogikgatteranwendung umfasst:
a. mindestens eine dritte Laserquelle (SL3), die zum Erzeugen eines optischen Adressierungsstrahls (FLA) konfiguriert ist, der zum Ausüben einer Lichtbewegung auf die in der dreidimensionalen Matrix aus optischen Pinzetten eingefangenen Atome angepasst ist,
b. eine zweite verformbare Linse (LD2) mit einer variablen Brennweite, die zum Fokussieren des optischen Adressierungsstrahls in die dreidimensionale Matrix aus optischen Pinzetten konfiguriert ist, und
c. zwei akusto-optische Deflektoren (DOA3, DOA4), die zum räumlichen Steuern der Ausbreitungsrichtung des optischen Adressierungsstrahls konfiguriert sind, wobei sie mit der zweiten verformbaren Linse zusammenwirken, um den Adressierungsstrahl in Übereinstimmung mit einer optischen Pinzette der Matrix zu fokussieren.

9. Vorrichtung nach einem der vorstehenden Ansprüche, wobei das magneto-optische Kühlsystem eine vierte Laserquelle (SL4) umfasst, die zum Erzeugen eines optischen Laserkühlstrahls konfiguriert ist, und einen Umlenkspiegel (MR2), der innerhalb des Ultrahochvakuumgehäuses angeordnet ist, um den optischen Kühlstrahl in einer Ausbreitungsrichtung entgegengesetzt zu derjenigen des Atomstrahls zu lenken.

10. Vorrichtung nach einem der vorstehenden Ansprüche, wobei die dreidimensionale Matrix aus optischen Pinzetten mindestens 5 Ebenen mit mindestens 16x16 optischen Pinzetten umfasst.

11. Vorrichtung nach einem der vorstehenden Ansprüche, wobei der Kryostat ein 4K-Kryostat ist.

12. Vorrichtung nach einem der vorstehenden Ansprüche, wobei die Atomquelle eine Rubidiumatomquelle ist.

13. Verwendung einer Vorrichtung nach einem der vorstehenden Ansprüche zum Ausführen von Quantenberechnungen auf einen Satz von mindestens 500 und vorzugsweise mindestens 1000 Qubits vom Rydberg-Atom-Typ.

## Claims

1. A quantum-computing device comprising:
• an atom-trapping unit comprising a first laser source (SL1) suitable for generating a trapping optical beam (FP), a spatial light modulator (SLM) configured to modulate said trapping optical beam, a first aspherical lens (LA1) configured to focus the trapping optical beam modulated by the spatial light modulator and a second aspherical lens (LA2) placed facing the first aspherical lens along a given optical axis, said lens being suitable for collimating the trapping optical beam focused by the first aspherical lens, the spatial light modulator being configured so as to interact with the first aspherical lens to generate a three-dimensional array of optical tweezers (M3P) in a space between the first and second aspherical lenses, each of the optical tweezers being capable of trapping at most one atom;
• an atom source (SAT), configured to generate a beam of atoms (JA) that is directed toward the space containing the three-dimensional array of optical tweezers;
• a magneto-optical system (SM) for cooling the atoms of the beam, configured to generate, in the space containing the three-dimensional array of optical tweezers, a cloud of atoms capable of being trapped by said optical tweezers;
• a system (SPQ) for applying quantum logic gates to atoms trapped in the optical tweezers of the three-dimensional array of optical tweezers;
• an ultra-high-vacuum chamber (EV) containing at least the first and the second aspherical lenses, as well as the space between the two said lenses; and
• a cryostat for establishing a cryogenic temperature in the ultra-high-vacuum chamber;
in which device:
• the magneto-optical system for cooling the atoms of the beam is of the gray-molasses type
• said atom-trapping unit comprises two lens-holding barrels (B1, B2) placed facing, each barrel holding one of said aspherical lenses with a clearance in a plane perpendicular to a longitudinal axis of the barrel, coinciding with an optical axis of the lens, said clearance being sufficient to compensate for a differential in thermal contraction between the barrel and the lens during a passage from an ambient temperature to said cryogenic temperature, and each of the lens-holding barrels has, at one end, a stop (BF) and contains a spring (RC) suitable for exerting, on the aspherical lens, a force oriented along said longitudinal axis, pressing the lens against the stop.

2. The device as claimed in any one of the preceding claims, wherein each of the aspherical lenses has, on its faces, a conductive coating (RCT) that is transparent at the wavelength of said trapping beam, said coating having a thickness smaller than 100 nanometers.

3. The device as claimed in any one of the preceding claims, also comprising a camera (CAMP) that interacts with the second aspherical lens to acquire an image of atoms trapped by the optical tweezers of the three-dimensional array.

4. The device as claimed in any one of the preceding claims, further comprising an assembling unit (UA) configured to create and move a movable optical tweezer in one of the planes of said three-dimensional array of optical tweezers.

5. The device as claimed in claim 4, wherein the assembling unit comprises:
• a second laser source (SL2) configured to generate an assembling optical beam,
• a first deformable lens (LD1), having a variable focal length, configured to focus the assembling optical beam so as to form an optical tweezer the position of which may be varied axially so as to select a plane of said three-dimensional array of optical tweezers, and
• two acousto-optical deflectors (DAO1, DAO2) configured to move said movable optical tweezer in the selected optical-tweezer plane along two directions perpendicular to the axis of the assembling optical beam.

6. The device as claimed in any one of the preceding claims, further comprising, inside the ultra-high-vacuum chamber:
• a set of electrodes (EL) configured to generate an electrostatic field the strength and direction of which may be adjusted in the space containing the three-dimensional array of optical tweezers, and
• a set of coils (BS) configured to generate a magnetostatic field the strength and direction of which may be adjusted in the space containing the three-dimensional array of optical tweezers.

7. The device as claimed in claim 6, wherein said sets of electrodes and coils are arranged between the space containing the three-dimensional array of optical tweezers and a cold plane (PF) of the cryostat and provide an entryway to said space for at least one laser beam, the device also comprising a steering mirror (MR1), also located inside the ultra-high-vacuum chamber, for directing said laser beam through said entryway.

8. The device as claimed in any one of the preceding claims, wherein the system for applying quantum logic gates comprises at least:
a. at least a third laser source (SL3) configured to generate an addressing optical beam (FLA), suitable for applying light to move atoms trapped in the three-dimensional array of optical tweezers,
b. a second deformable lens (LD2), having a variable focal length, configured to focus said addressing optical beam in said three-dimensional array of optical tweezers, and
c. two acousto-optical deflectors (DOA3, DOA4) that are configured to spatially control the direction of propagation of the addressing optical beam, and that interact with said second deformable lens to focus said addressing beam on one optical tweezer of said array.

9. The device as claimed in any one of the preceding claims, wherein the magneto-optical cooling system comprises a fourth laser source (SL4) configured to generate an optical laser cooling beam and a steering mirror (MR2), located inside the ultra-high-vacuum chamber, for directing said optical cooling beam in a direction of propagation opposite to that of the beam of atoms.

10. The device as claimed in any one of the preceding claims, wherein said three-dimensional array of optical tweezers comprises at least 5 planes of at least 16x16 optical tweezers.

11. The device as claimed in any one of the preceding claims, wherein said cryostat is a 4 K cryostat.

12. The device as claimed in any one of the preceding claims, wherein said atom source is a source of rubidium atoms.

13. The use of a device as claimed in any one of the preceding claims to carry out quantum computations on a set of at least 500 and preferably at least 1000 qubits of the Rydberg-atom type.
